(19) Europäisches Patentamt

European Patent Office

Office européen des brevets

(11) **EP 1 195 303 B1**

(12) **EUROPEAN PATENT SPECIFICATION**

(45) Date of publication and mention
of the grant of the patent:
**14.01.2004 Bulletin 2004/03**

(51) Int Cl.⁷: **B60T 8/00**, B60K 41/14

(21) Application number: **01123686.6**

(22) Date of filing: **02.10.2001**

(54) **Overall control system for a posture control apparatus and a continuously variable transmission of a vehicle**

Gesamtsteuerungssystem für ein Fahrdynamikregelungssystem und CVT-Getriebe in einem Kraftfahrzeug

Dispositif global de contrôle pour un système de réglage de la dynamique de route et une transmission du type CVT pour un véhicule automobile

(84) Designated Contracting States:
**DE ES FR GB IT**

(30) Priority: **05.10.2000 JP 2000306439**

(43) Date of publication of application:
**10.04.2002 Bulletin 2002/15**

(73) Proprietor: **Mazda Motor Corporation
Aki-gun, Hiroshima 735-8670 (JP)**

(72) Inventors:
• **Tsuyama, Toshiaki
Aki-gun, Hiroshima 735-8670 (JP)**

• **Okazaki, Haruki
Aki-gun, Hiroshima 735-8670 (JP)**
• **Sasaki, Hiroshi
Aki-gun, Hiroshima 735-8670 (JP)**

(74) Representative: **Laufhütte, Dieter, Dr.-Ing. et al
Lorenz-Seidler-Gossel
Widenmayerstrasse 23
80538 München (DE)**

(56) References cited:
**DE-A- 19 844 103          DE-A- 19 963 747
US-A- 4 788 892           US-A- 5 257 189**

## Description

## BACKGROUND OF THE INVENTION

The present invention belongs to the field of technologies that control the movement of a vehicle, and relates to an overall control system that controls the posture of a vehicle during cornering with a specific aim of rectifying understeer.

In recent years, vehicles have been fitted with various control systems. These include anti-lock braking systems that achieve favorable braking by controlling the braking force of each wheel during braking and traction control systems that achieve improved starts and acceleration by controlling the engine output and braking forces to avoid wheel spin due to excessive torque being transmitted to the drive wheels. Posture control systems, which utilize the functions of the above systems or operate independently of them, are also being implemented to stabilize the behavior of vehicles during cornering.

On detecting understeer or oversteer during cornering, a posture control system controls the vehicle posture in the yaw direction with the aim of stabilizing the vehicle as it corners. This can be achieved by performing control to reduce the engine output or by controlling the braking force of each wheel. When implementing such a system, however, there is the problem of how the control performed by this system can coexist with the control performed over the gearing of the vehicle. One proposed solution to this problem is the technology disclosed by Japanese Laid-Open Patent Application H10-236186. This technology prohibits gear changes by an automatic transmission while posture control is being performed during cornering and so keeps the vehicle in the same gear.

Another related technology is disclosed by Japanese Laid-Open Patent Application H11-44359. In a vehicle fitted with an anti-lock braking system as mentioned above and a belt-type continuously variable transmission, this technology supplements the line pressure to prevent slippage of the belt in the continuously variable transmission while the anti-lock braking system is in operation.

When the above kind of posture control system is used to eradicate understeer during cornering, (1) reduction of the number of cylinders in which combustion is performed, (2) retard control over ignition timing, and (3) control over the throttle opening for the case where a vehicle is fitted with a system for controlling the throttle opening result in a reduction in vehicle speed due to the suppression of engine output and vehicle driving torque. At the same time, a braking force is applied to the wheels on the inside of the corner, which further reduces the vehicle driving torque and creates a moment in the turning direction of the vehicle. This improves the turn-in performance of the vehicle, but is thought to lead to the following problem.

When a vehicle is fitted with a system for controlling the throttle opening, it is effective to reduce the vehicle driving torque by having this system accurately reduce the engine output by reducing the throttle opening. However, reducing the engine output by reducing the throttle opening results in a drop in engine speed, so that there is a large decrease in acceleration following the rectification of the understeer.

If understeer occurs when the engine output is already low with the throttle opening almost closed or completely closed, there is little scope for reducing the vehicle driving torque by reducing the engine output. In this case, the understeer can be rectified by applying the brakes as soon as the understeer control is initiated, though this kind of sudden application of the brakes tends to destabilize the behavior of the vehicle.

For a vehicle equipped with continuously variable transmission, the present invention incorporates posture control for rectifying understeer when cornering as described above, with gear ratio control for the continuously variable transmission so as to overcome the problems such as poor acceleration due to a decrease in engine speed and destabilization of vehicle behavior due to a sudden application of the brakes.

US 5,257,189 A teaches to shift down when strong understeer is determined based on the differences with the targeted yaw rate.

According to DE 199 63 747 A1 it is taught to brake one or more of the vehicle wheels if the understeer is determined.

DE 198 44 103 teaches to combine a braking operation by traction control or vehicule stability control systems with a correction of the drive ratio of a continuously variable transmission in the direction of up shift.

## SUMMARY OF THE INVENTION

In order to solve the problem described above, a vehicle overall control system according to the present invention has the following configuration.

A first aspect of the present invention is an overall control system for a vehicle that includes (i) a posture control apparatus that controls vehicle posture in a yaw direction during cornering by controlling output of the engine and braking forces applied to right and left wheels and (ii) a continuously variable transmission whose gear ratio can be steplessly changed based on gearing characteristics that are set in advance, the overall control system including: an understeer detecting means for detecting understeer while the vehicle is cornering; an engine output reducing means for reducing the engine output; a gear ratio changing means for changing the gear ratio of the continuously variable transmission from a gear ratio that is based on the gearing characteristics; and a control means for having the gear ratio shifted down by the gear ratio changing means when the understeer detecting means has detected the understeer.

When the understeer detecting means has detected the understeer, it is preferable for the control means to control a reduction in the engine output by the engine output reducing means and a shift down in the gear ratio by the gear ratio changing means to have vehicle driving torque reduced while suppressing a decrease in engine speed.

With the above configuration, when understeer is detected during cornering, the engine output is reduced by the engine output reducing means, which reduces the vehicle driving torque and vehicle speed, thereby rectifying the understeer. When doing so, the gear ratio changing means shifts down the gear ratio of the continuously variable transmission from a gear ratio that is based on preset gearing characteristics. This suppresses a reduction in engine speed compared to a case where engine output is reduced while maintaining a gear ratio that is based on the gearing characteristics, which results in a reduction in the throttle opening, for example. Suppressing the reduction in engine speed improves the acceleration of the vehicle following the rectification of the understeer. It should be noted that even when control is performed to reduce engine output without controlling the throttle opening, the present invention can suppress the reduction in engine speed that accompanies the reduction in engine output.

Also, when understeer has been detected by the understeer detecting means and the throttle opening in the engine is below a predetermined value, it is preferable that the control means has the gear ratio of the continuously variable transmission shifted down by the gear ratio changing means before the braking forces are controlled by the posture control apparatus (the ninth aspect of the invention).

In this way, when understeer has been detected during cornering and the throttle opening in the engine is below a predetermined value, the gear ratio of the continuously variable transmission is shifted down by the gear ratio changing means, so that in cases where it is difficult to rectify understeer by controlling the engine, the understeer can be rectified using the engine brake instead of unnecessarily implementing braking control.

Also, according to a second aspect of the present invention, it is preferable that the control means in the first aspect of the invention controls a reduction in the engine output by the engine output reducing means and a shift down in the gear ratio by the gear ratio changing means to reduce vehicle driving torque while keeping the engine speed at a same level as when control is commenced.

When suppressing the decrease in engine speed as in the first aspect of the present invention, operating in this way keeps the engine speed at a same level as when control to rectify the understeer is commenced. As a result, favorable acceleration can be achieved following the rectification of the understeer.

Also, according to a third aspect of the present invention, it is preferable that the control means in the first aspect of the invention controls a reduction in the engine output by the engine output reducing means and a shift down in the gear ratio by the gear ratio changing means to reduce vehicle driving torque while preventing engine speed from falling below a level that is able to produce almost a same level of acceleration as an engine speed when control is commenced.

Operating in this way prevents engine speed from falling below a level that is able to produce almost a same level of acceleration as an engine speed at a point when control is commenced. As a result, favorable acceleration can be achieved following the rectification of the understeer.

Also, according to a fourth aspect of the present invention, it is preferable that the control means in the first aspect of the invention controls a reduction in the engine output by the engine output reducing means and a shift down in the gear ratio by the gear ratio changing means to reduce vehicle driving torque while preventing engine speed from falling to a level at which the engine stalls.

Operating in this way prevents engine speed from falling to a level at which the engine stalls. As a result, acceleration can be prevented from worsening and the engine can be kept from stalling.

Also, according to a fifth aspect of the present invention, it is preferable that the control means in the first aspect of the invention controls a reduction in the engine output by the engine output reducing means and a shift down in the gear ratio by the gear ratio changing means to reduce vehicle driving torque while ensuring that engine speed can fall only to a value where a temperature of a catalytic converter apparatus used to clean exhaust gas is maintained within a predetermined range.

Operating in this way ensures that engine speed does not fall to a value where a temperature of a catalytic converter apparatus used to clean exhaust gas drops. As a result, acceleration can be prevented from worsening and problems with the operation of the catalytic converter due to a reduction in temperature can be avoided.

Also, according to a sixth aspect of the present invention, it is preferable that the control means of any of the first to fifth aspects of the invention controls the timing at which the engine output reducing means and the gear ratio changing means operate so that the gear ratio is shifted down in synchronization with a reduction in vehicle driving torque achieved through a reduction in engine output.

By operating in this way, the control performed to suppress the drop in engine speed by shifting down the gear ratio is synchronized with the reduction in vehicle driving torque achieved through a reduction in engine output, so that when, for example, engine control is less responsive than control over the gear ratio, it can be prevented that the operation of the engine may become unstable. Examples of this include a case where shift down control for the gear ratio causes a temporary increase in engine speed followed by a reduction in engine output and a drop in engine speed. Also, for a different case where control over the gear ratio is too late, a fall in engine output can accompanied by a temporary fall in engine speed followed by a rise in engine speed. With the present invention, however, such problems can be avoided and the operation of the engine can be kept stable.

As described above, the first to sixth aspects of the present invention refer to a vehicle that is equipped with (i) a posture control apparatus that controls vehicle posture in a yaw direction during cornering by controlling engine output and braking forces and (ii) a continuously variable transmission whose gear ratio can be steplessly changed based on gearing characteristics that are set in advance. When understeer is detected during cornering, the engine output is reduced by an engine output reducing means, which reduces the vehicle speed and vehicle driving torque, thereby rectifying the understeer. When doing so, the gear ratio changing means has the gear ratio of the continuously variable transmission shifted down from a gear ratio that is based on the gearing characteristics, thereby suppressing the drop in engine speed that accompanies the drop in engine output. As a result, the acceleration of the vehicle following the rectification of the understeer is improved.

Also, according to the seventh aspect of the present invention, when understeer is detected using cornering and the throttle opening of the engine is below a predetermined value, which is to say, there is little scope for performing control that reduces the engine output, the understeer is rectified by the engine brake that results from the gear ratio of the continuously variable transmission being shifted down. By doing so, implementation of braking control can be suppressed, and favorable posture control can be performed without the behavior of the vehicle being destabilized through the application of the brakes.

## BRIEF DESCRIPTION OF THE DRAWINGS

Fig. 1 is a block diagram showing a control system that is an embodiment of the present invention.
Fig. 2 is a simplified drawing showing the configuration of a continuously variable transmission that is used in the present embodiment.
Fig. 3 is a gearing control map for the continuously variable transmission.
Fig. 4 is a flowchart showing a main routine of the control operation performed in the present embodiment of the invention.
Fig. 5 is a flowchart showing a subroutine of the same control operation.

Fig. 6 is a map for a first torque reduction that is used in the above subroutine.
Fig. 7 is a map for a second torque reduction that is used in the same subroutine.
Fig. 8 is a map for a target shift down amount that is used in the same subroutine.

## DETAILED DESCRIPTION OF THE INVENTION

The following describes an embodiment of the present invention.

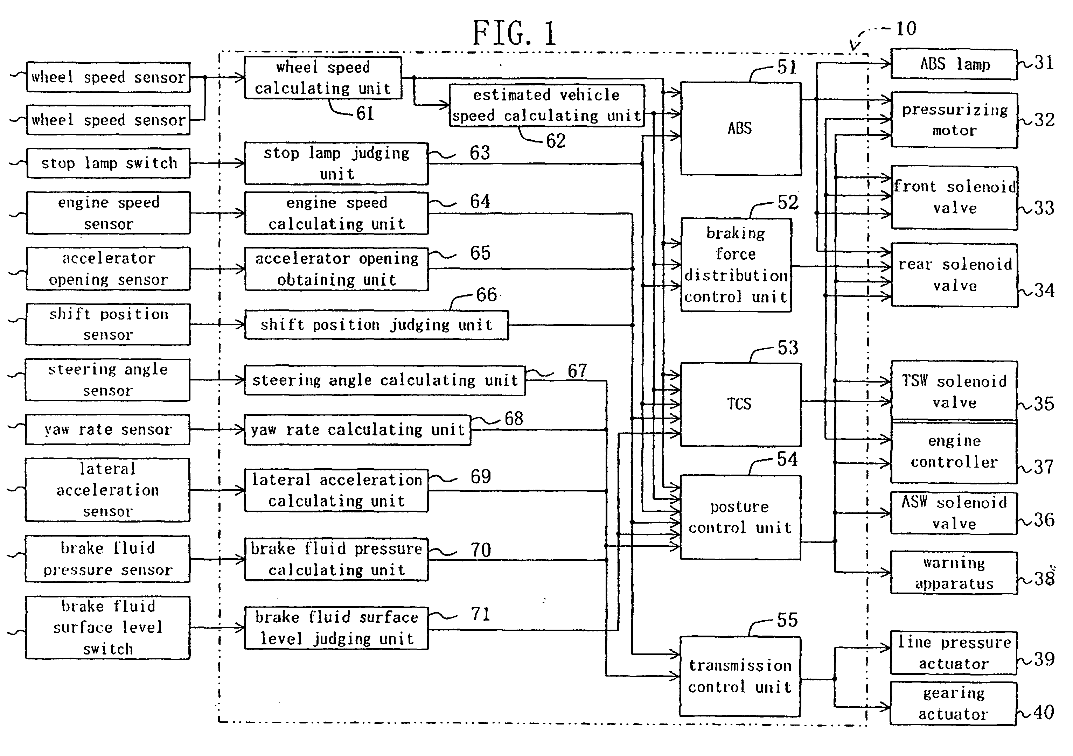

First, a control system of this embodiment is described with reference to Fig. **1**. This system includes a control unit **10** that receives inputs from wheel speed sensors (each numbered **11**) detecting the speed of each wheel, a steering angle sensor **12** detecting the steering angle of the steering wheel, a yaw rate sensor **13** detecting the yaw rate of the vehicle, a lateral acceleration sensor **14** detecting the acceleration of the vehicle in a lateral direction, an accelerator opening sensor **15** detecting how far the accelerator pedal is being pressed by the driver, a stop lamp switch **16** canceling any control performed by an anti-lock braking system, an engine speed sensor **17** detecting the engine speed (revolutions per minute), a shift position sensor **18** detecting the position, such as "drive" or "reverse", of the continuously variable transmission shift lever, a brake fluid pressure sensor **19** detecting the brake fluid pressure of a master cylinder used as a brake fluid pressurizer for the braking system, and a brake fluid surface level switch **20** detecting the level of the surface of the brake fluid in a reserve tank in the same braking system.

The control unit **10** outputs control signals to an ABS lamp **31** indicating whether the anti-lock braking system is operating, a pressurizing motor **32** operating a pressurizing pump that is provided as a second brake fluid pressurizer for the braking system, a front solenoid valve **33** and a rear solenoid valve **34** provided as pressurizing/depressurizing means that supply and draw away brake fluid to and from brake apparatuses that are provided on each wheel, a TSW solenoid valve **35** provided as a pressurizing/depressurizing means that connects and cuts off a passage between the master cylinder and the brake apparatuses provided on each wheel, an ASW solenoid valve **36** provided as a pressurizing/ depressurizing means that connects and cuts off a passage between the master cylinder and the pressurizing pump mentioned above, an engine controller **37** controlling the engine output, a warning apparatus **38** informing the driver when vehicle posture control is being performed during cornering, a line pressure actuator **39** controlling the line pressure of a continuously variable transmission, and a gearing actuator **40** controlling the gear ratio of the continuously variable transmission.

In order to receive an input of signals from the sensors and switches numbered **11** to **20**, perform predetermined processes, and output control signals to the components numbered **31** to **40**, the control unit **10** is constructed as described below.

The control unit **10** includes an anti-lock braking system unit **51** (hereafter referred to as the "ABS **51**"), a braking force distribution control unit **52** that distributes the braking force so as to keep the rear wheels from locking during braking, a traction control unit **53** (hereafter referred to as the "TCS **53**") that prevents the drive wheels from slipping due to an excessive driving force being applied to the drive wheels, a posture control unit **54** that controls the posture of the vehicle in the yaw direction during cornering, and a transmission control unit **55** that controls the operation of the line pressure actuator **39** and the gearing actuator **40** that control the posture of the vehicle through the operation of the continuously variable transmission.

In the control unit **10**, a wheel speed calculating unit **61** and an estimated vehicle speed calculating unit **62** calculate the wheel speed of each wheel and the estimated vehicle speed, based on signals received from the wheel speed sensor **11** mounted on each wheel. These calculated values are inputted into the ABS **51**, the braking force distribution control unit **52**, the TCS **53**, and the posture control unit **54.**

A signal outputted by the stop lamp switch **16** is inputted, via a stop lamp judging unit **63**, into the ABS **51**, the braking force distribution control unit **52**, the TCS **53**, and the posture control unit **54.**

The signals outputted by the engine speed sensor **17**, the accelerator opening sensor **15**, and the shift position sensor **18** are inputted, via an engine speed calculating unit **64**, an accelerator opening obtaining unit **65**, and a shift position judging unit **66,** respectively, into the TCS **53**, the posture control unit **54,** and the transmission control unit **55**.

While not illustrated, the signal outputted by the accelerator opening sensor **15** is also inputted into a throttle opening control unit. Based on the amount of depression of the accelerator pedal indicated by the signal outputted by the accelerator opening sensor **15** and other indications of the state of the vehicle, the throttle opening control unit controls the opening of the throttle valve in the engine in accordance with characteristics that are set in advance.

The signals outputted by the steering angle sensor **12**, the yaw rate sensor **13,** the lateral acceleration sensor **14**, and the brake fluid pressure sensor **19** are respectively inputted into a steering angle calculating unit **67**, a yaw rate calculating unit **68**, a lateral acceleration calculating unit **69**, and a brake fluid pressure calculating unit **70.** Based on these signals, the calculating units calculate the steering angle, the yaw rate, the lateral speed, and the brake fluid pressure in the master cylinder. The results of these calculations are inputted into the posture control unit **54** and the transmission control unit **55.** The signal outputted by the brake fluid surface level switch **20** is inputted into the TCS **53** and the posture control unit **54** via a brake fluid surface level judging unit **71.**

The ABS **51** calculates control values based on the inputted signals. Based on the calculation results, the ABS **51** outputs signals to the ABS lamp **31,** the pressurizing motor **32,** the front solenoid valve **33,** and the rear solenoid valve **34** to control the operation of these components. The braking force distribution control unit **52** also controls the operation of the rear solenoid valve **34.**

The TCS **53** outputs signals to the pressurizing motor **32**, the front solenoid valve **33,** the rear solenoid valve **34**, the TSW solenoid valve **35**, and the engine controller **37** to control the operation of these components.

The posture control unit **54** outputs signals to the pressurizing motor **32**, the front solenoid valve **33,** the rear solenoid valve **34**, the TSW solenoid valve **35**, the ASW solenoid valve **36**, the engine controller **37**, and the warning apparatus **38** to control the operation of these components. In other words, the sensors and switches numbered **11** to **20,** the posture control unit **54** and calculating units and judging units numbered **61** to **71** of the control unit **10**, the pressurizing motor **32,** the valves **33** to **36** and the engine controller **37** form a posture control apparatus that controls the vehicle posture in the yaw direction during cornering by individually controlling the engine output and the braking forces applied to the left and right wheels.

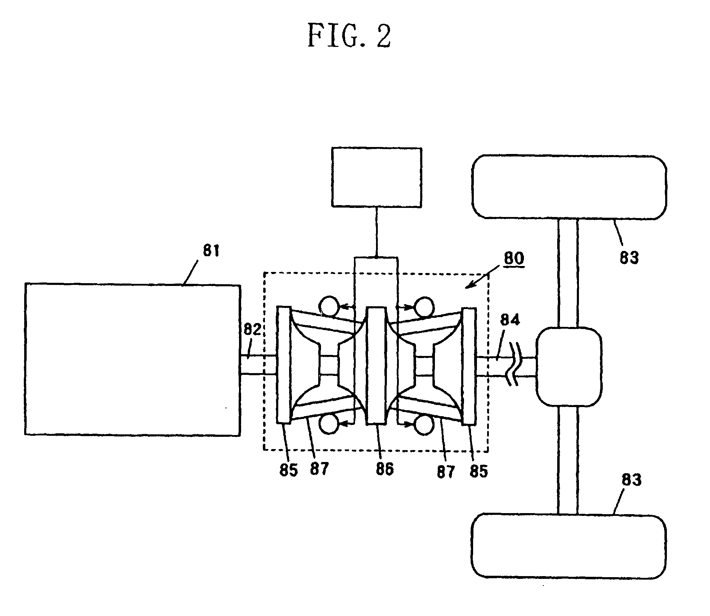

The transmission control unit **55** outputs signals to the line pressure actuator **39** and the gearing actuator **40** to control the operation of these components. The following describes one example of a continuously variable transmission that is controlled by the transmission control unit **55**. In the present embodiment, a troidal continuously variable transmission is used. As shown in Fig. **2**, a continuously variable transmission **80** (hereafter referred to as the "CVT" **80**) is disposed between an output axle **82** of an engine **81** and a drive axle **84** on which the drive wheels (both numbered **83**) are mounted. The CVT **80** is constructed so as to transmit the output rotation of the engine **81** to the drive wheels **83** with stepless gearing.

In more detail, the troidal CVT **80** includes a pair of input-side disks **85** that are connected to the output axle **82** of the engine **81**, an output-side disk **86** that is connected to the drive axle **84** and is arranged so that its two main surfaces face the two input-side disks **85**, and friction rollers **87** that transmit torque between the disks **85** and **86** by being positioned between the opposing surfaces of the input-side disks **85** and the output-side disk **86** and in frictional contact with them. The tilt angles of the friction rollers **87** can be changed due to oil pressure, resulting in a change in the rotational radius of the contact points of the friction rollers **87** with the disks **85** and **86,** so that the power transmission from the engine output axle **82** to the drive axle **84** can be steplessly varied.

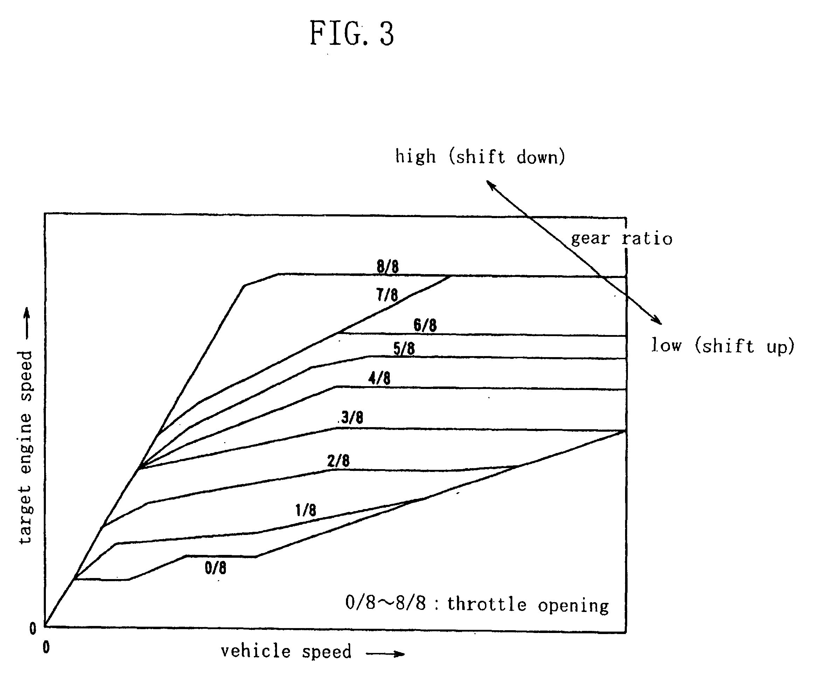

As shown in Fig. **3**, the CVT **80** has its gear ratio controlled in accordance with a gearing map that is stored in the transmission control unit **55,** so that a target engine speed is maintained in keeping with the speed of the vehicle and the throttle opening (or accelerator opening).

The following describes the posture control in the yaw direction of the vehicle during cornering, which is achieved by the posture control unit **54** and the transmission control unit **55** in the control unit **10**. It should be noted that in the present embodiment, control to rectify oversteer is performed by the posture control unit **54** alone, whereas control to rectify understeer is performed by the posture control unit **54** and the transmission control unit **55.**

First, an overview of these kinds of control is given. The control performed to rectify oversteer is as follows. When it is detected that the actual yaw rate $\phi$ for the vehicle as detected by the yaw rate sensor **13** exceeds the target yaw rate $\phi_0$ by at least a preset amount, or in other words, when the rate at which the yaw angle is increasing is too high, a braking force is applied to the front wheel situated on the outside of the turn to produce a turning moment for the vehicle in an opposite direction to the turning direction, which rectifies the oversteer.

The control performed to rectify understeer is as follows. When it is detected that the actual yaw rate $\phi$ for the vehicle falls short of the target yaw rate $\phi_0$ by at least a preset amount, or in other words, when the rate at which the yaw angle is increasing is too low, control can be performed to lower the engine output and change the gear ratio of the CVT **80** so as to reduce the vehicle driving torque and vehicle speed. Also, when necessary, a braking force is applied to the front wheel situated on the inside of the turn. These measures reinforce a cornering force that opposes the centrifugal force that acts on the vehicle and produce a turning moment for the vehicle in the turning direction, which rectifies the understeer.

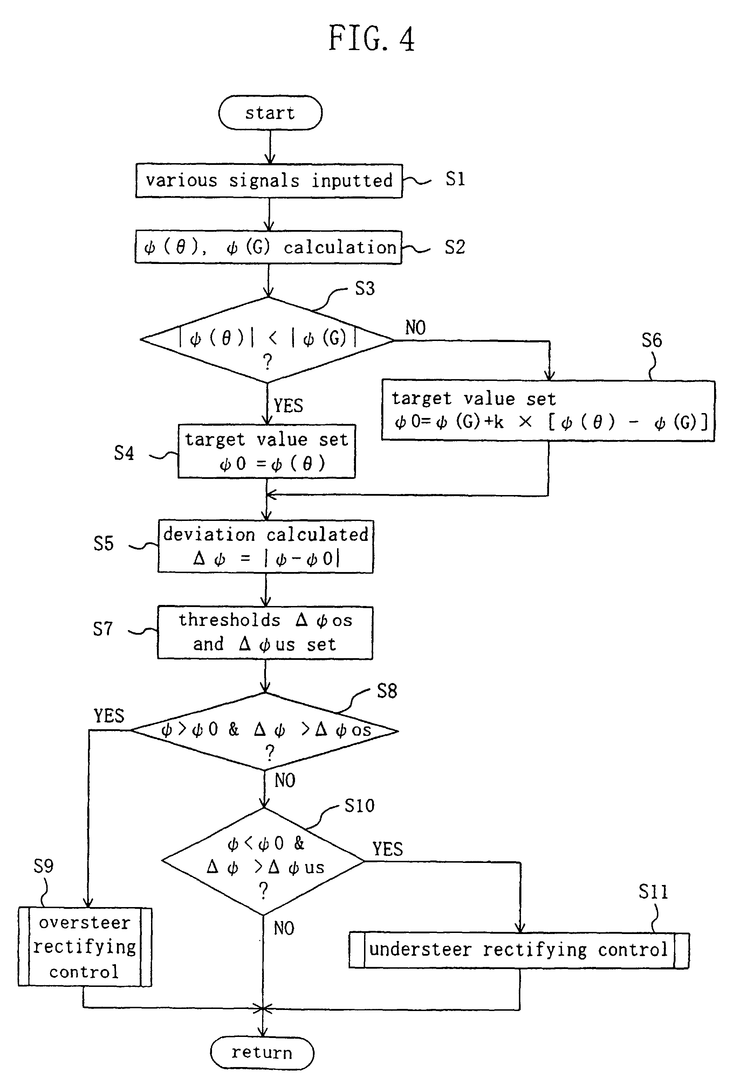

The following describes the overall operation performed for posture control, with reference to the flowchart shown in Fig. **4**.

First, in step **S1**, the control unit **10** reads in signals from the sensors and switches numbered **11** to **20** that are shown in Fig. **2**. In step **S2**, the control unit **10** calculates a first target yaw rate $\phi_{(\theta)}$ in accordance with the steering angle $\theta$ that has been calculated by the steering angle calculating unit **67** based on the signal outputted by the steering angle sensor **12** and a second target yaw rate $\phi_{(G)}$ in accordance with the lateral acceleration *G* that has been calculated by the lateral acceleration calculating unit **69** based on the signal outputted by the lateral acceleration sensor **14.**

More specifically, the first target yaw rate $\phi_{(\theta)}$ is calculated using Equation (1) below, using (a) the estimated vehicle speed V that has been calculated by the estimated vehicle speed calculating unit **62** based on the signals outputted by the wheel speed sensors **11** and (b) the steering angle $\theta$ that has been calculated by the steering angle calculating unit **67** as described above. In Equation (1), *K* represents a stability factor for the vehicle, while *L* represents the wheelbase.

$$\phi_{(\theta)} = V \times \theta / \{(1+K\times V^2) \times L\} \qquad (1)$$

The second target yaw rate $\phi_{(G)}$ is calculated using Equation (2) below, using the estimated vehicle speed V described above and the lateral acceleration *G* that has been calculated by the lateral acceleration calculating unit **69** as described above.

$$\phi_{(G)} = G/V \qquad (2)$$

Next, in step **S3**, the control unit **10** judges whether the absolute value of the first target yaw rate $\phi_{(\theta)}$ is below the absolute value of the second target yaw rate $\phi_{(G)}$. This judgment is performed so that the value, out of the first target yaw rate $\phi_{(\theta)}$ and the second target yaw rate $\phi_{(G)}$, with the smaller absolute value is set as the target yaw rate $\phi_0$ that is used below during vehicle posture control.

When the judgment "YES" is given in step **S3** ($|\phi_{(\theta)}| < | \phi_{(G)}|$), the procedure advances to step **S4** where the first target yaw rate $\phi_{(\theta)}$ that is based on the steering angle $\theta$ is set as the target yaw rate $\phi_0$. After this, in step **S5**, the control unit **10** calculates the deviation $\Delta\phi$ between the target yaw rate $\phi_0$ used for control and the actual yaw rate $\phi$ for the vehicle that has been calculated by the yaw rate calculating unit **68** based on the signal outputted by the yaw rate sensor **13**. This deviation $\Delta\phi$ is defined as the absolute value of the deviation between the actual yaw rate $\phi$ and the target yaw rate $\phi_0$ used for control ($\Delta\phi = |\phi - \phi_0|$).

When the judgment "NO" is given in step **S3** ($|\phi_{(\theta)}| |\phi_{(G)}|$), the procedure advances to step **S6** where the second target yaw rate $\phi_{(G)}$ that is based on the lateral acceleration *G* is set as the target yaw rate $\phi_0$. In this case, the target yaw rate $\phi_0$ for control is amended in accordance with Equation (3) using a steering angle component. Here, the value *k* in Equation (3) is a constant that is below 1.

$$\phi_0 = \phi_{(G)} + k \times [\phi_{(\theta)} - \phi_{(G)}] \qquad (3)$$

After this, in step **S5,** the control unit **10** calculates the deviation $\Delta\phi$ between the amended target yaw rate $\phi_0$ and the actual yaw rate $\phi$.

Here, when the target yaw rate $\phi_0$ for control is set using the second target yaw rate $\psi_{(G)}$ that is based on the lateral acceleration *G*, the target yaw rate $\phi_0$ is amended using the steering angle component to prevent the implementation of unnecessary posture control for the case when the understeer results intentionally from the driving style of the driver, that is, intentional understeering.

This is to say, there are two kinds of understeer. A first kind is where excessive speed prevents the vehicle from turning in accordance with the driver's operation of the steering wheel. A second kind is intentionally caused by an operation where the driver keeps the steering wheel at a constant angle and simultaneously increases the driving force. When the target yaw rate $\phi_0$ for control is set using the second target yaw rate $\phi_{(G)}$ that is based on the lateral acceleration $G$, it is not possible to distinguish which of the two kinds of understeer has occurred from the value of the lateral acceleration $G$ alone.

For the above reason, when the second target yaw rate $\phi_{(G)}$ is taken as the target yaw rate $\phi_0$ for control, the target yaw rate $\phi_0$ is amended using the steering angle component so that posture control is actively implemented for cases where the driver has turned the steering wheel excessively for the current vehicle speed, but is suppressed for cases where the understeer is intended by the driver. In this case, the constant $k$ can be changed in accordance with the lateral acceleration $G$ relative to a road friction coefficient or the like, so that posture control can always be implemented with suitable timing for the amount of friction achieved for the present road surface.

After calculating the deviation $\Delta\phi$ between the actual yaw rate $\phi$ and the target yaw rate $\phi_0$ in step **S5** as described above, the control unit **10** executes step **S7**, where the control unit **10** sets the threshold value $\Delta\phi_{os}$ for the application of oversteer rectifying control and the threshold value $\Delta\phi_{us}$ for the application of understeer rectifying control.

Next, when the actual yaw rate $\phi$ exceeds the target yaw rate $\phi_0$ (i.e. oversteer has occurred) and the absolute value of the deviation $\Delta\phi$ between the two rates exceeds the threshold value $\Delta\phi_{os}$, the control unit **10** executes step **S9** following step **S8** and applies control to rectify the oversteer. Conversely, when the actual yaw rate $\phi$ is below the target yaw rate $\phi_0$ (i.e. understeer has occurred) and the absolute value of the deviation $\Delta\phi$ between the two rates exceeds the threshold value $\Delta\phi_{us}$, the control unit **10** executes step **S11** following step **S10** and applies control to rectify the understeer.

The following describes the control to rectify understeer in step **S11** in more detail. This operation is characteristic to the present invention.

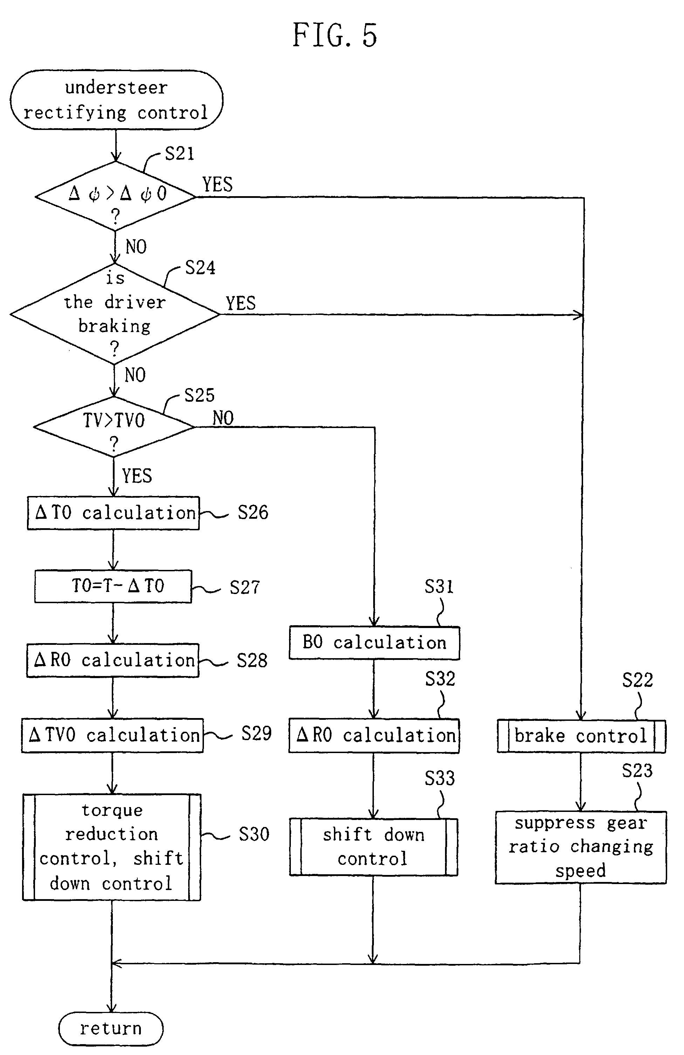

This control is performed in accordance with the flowchart shown in Fig. **5**. First, in step **S21,** the control unit **10** judges whether the deviation $\Delta\phi$ of the actual yaw rate $\phi$ from the target yaw rate $\phi_0$ used for control exceeds a predetermined threshold $\Delta\phi_0$.

After this, if the deviation $\Delta\phi$ exceeds the predetermined threshold $\Delta\phi_0$, which is to say, the actual yaw rate $\phi$ is far lower than the target yaw rate $\phi_0$ (corresponding to understeer), the control unit **10** executes step **S22** in which control is performed to rectify the understeer through immediate braking without performing understeer rectifying control that is based on a reduction in engine output. This is because in this case it is necessary to reduce the speed of the vehicle immediately, while providing the vehicle with a moment oriented in the turning direction to reliably rectify the understeer.

It should be noted that when braking is performed in this way, step **S23** is also executed so that the gear ratio of the CVT is controlled, in the same way as during normal driving, in accordance with a map (shown in Fig. **3**) that associates gear ratios with the current state of the vehicle. However, in the present case, control is performed so that the gear ratio is changed more gradually than during normal driving. This is because in cases like the one above where an immediate rectification of understeer is required, it is necessary to perform effective understeer rectifying control that focuses on braking and suppresses changes to the gear ratio.

When in step **S21**, the deviation $\Delta\phi$ is no greater than the predetermined threshold $\Delta\phi_0$, which is to say, the understeer is relatively slight, the control unit **10** executes step **S24,** where the control unit **10** judges, based on a signal outputted from the brake fluid pressure sensor **19** that detects the pressure of the brake fluid in the master cylinder, whether the driver is pressing the brake pedal. If the driver is pressing the brake pedal, the control unit **10** executes step **S22** and, in the same way as when the deviation $\Delta\phi$ exceeds the predetermined threshold $\Delta\phi_0$, only performs control that rectifies the understeer through braking. This is because when the driver presses the brake pedal, the posture of the vehicle is dominate by the braking, so that engine control or control of the gear ratio become largely ineffective in this case.

On the other hand, when the deviation $\Delta\phi$ is no greater than the predetermined threshold $\Delta\phi_0$ and the driver is not pressing the brake pedal, or in other words, when it is judged that the understeer has been intentionally produced due to the driving style of the driver, the control unit **10** executes step **S25**, where the control unit **10** judges whether the throttle opening $TV$ that is set in accordance with the pressure applied by the driver to the accelerator pedal exceeds a relatively low threshold $TV_0$. When the throttle opening $TV$ exceeds the threshold $TV_0$, the control unit **10** performs torque control in the step **S26** onwards so as to reduce the vehicle driving torque.

In more detail, first in step **S26** the control unit **10** calculates a target reduction $\Delta T_0$ for the vehicle driving torque $T$ that is based on the yaw rate $\phi$.

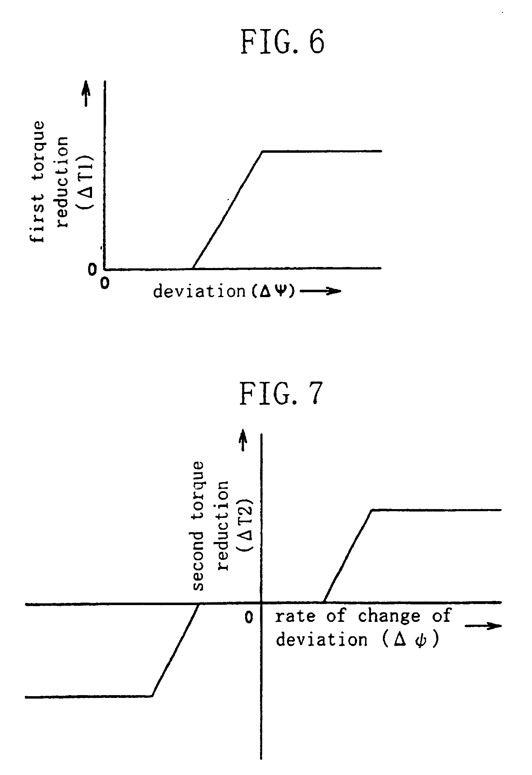

This calculation of the target torque reduction $\Delta T_0$ is performed based on the maps shown in Figs. **6** and **7**. That is to say, a first torque reduction $\Delta T_1$ corresponding to the magnitude of the deviation $\Delta\phi$ is found from the map in Fig. **6** and a second torque reduction $\Delta T_2$ corresponding to the rate of change in the deviation $\Delta\phi$ is found from the map in Fig. **7**. These torque reductions $\Delta T_1$ and $\Delta T_2$ are then added together to produce the target torque reduction $\Delta T_0$ ($\Delta T_0 = \Delta T_1 + \Delta T_2$).

As shown in Fig. **6**, the first torque reduction $\Delta T_1$ is set so as to increase in proportion with an increase in the deviation $\Delta\phi$ from a point where the deviation $\Delta\phi$ reaches a predetermined value until a set limit is reached.

As shown in Fig. **7**, the second torque reduction $\Delta T_2$ is set so as to change in a range for which an absolute value of the rate of change in the deviation $\Delta\phi$ is above a predetermined value until a set limit is reached. In the positive direction (a direction where the deviation $\Delta\phi$ is increasing), the second torque reduction $\Delta T_2$ is a positive value whose magnitude increases in proportion with an increase in the rate of change of the deviation $\Delta\phi$ within the stated range. In the negative direction (a direction where the deviation $\Delta\phi$ is decreasing), the second torque reduction $\Delta T_2$ is a negative value whose magnitude increases in proportion with an increase in the rate of change of the deviation $\Delta\phi$ in the stated range.

After this, in step **S27**, the control unit **10** calculates the target driving torque $T_0$ by subtracting the target torque reduction $\Delta T_0$ found as described above from the present vehicle driving torque $T$.

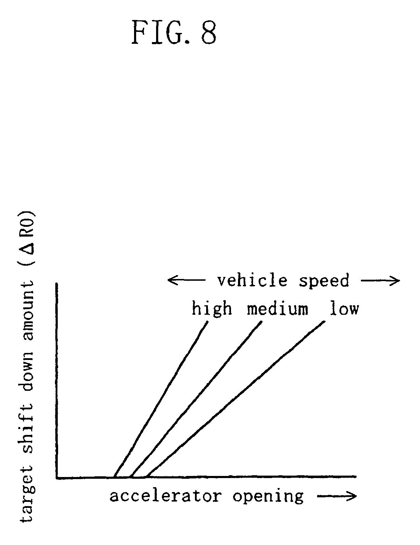

On the other hand, in step **S28,** the control unit **10** sets an amount of change by which the gear ratio of the CVT should be shifted down (the target shift down amount $\Delta R_0$), based on the state of the vehicle when the understeer rectifying control is commenced. Here, the CVT is made to shift down to suppress the reduction in engine speed that accompanies control that reduces engine output in order to reduce the torque to the target driving torque $T_0$. This target shift down amount $\Delta R_0$ is set based on a shift down map that is set in advance, as shown in Fig. **8**.

In the shift down map, the target shift down amount $\Delta R_0$ increases in proportion with the accelerator opening when starting the control, and for the same accelerator opening, the target shift down amount $\Delta R_0$ is set so as to increase with the speed of the vehicle. This is because the larger the accelerator opening, the greater the need for high acceleration following the rectification of the understeer, and the higher the speed of the vehicle, the greater the amount of shifting down that needs to be performed to ensure that a certain level of acceleration can be achieved.

Next, in step **S29**, the control unit **10** calculates the target decrease $\Delta TV_0$ in the throttle opening that is required to reduce the vehicle driving torque to the target value $T_0$ mentioned above when the CVT has been shifted down by the above target shift down amount $\Delta R_0$. In step **S30,** control is performed for the throttle opening of the engine and for the gear ratio of the CVT so that target decrease $\Delta TV_0$ in the throttle opening and the target shift down amount $\Delta R_0$ are both achieved.

Consequently, the vehicle driving torque $T$ is reduced to the target value $T_0$, resulting in the speed of the vehicle being reduced and in the understeer being rectified. In this case, part of the reduction in engine speed that would otherwise accompany the reduction in engine output due to the control performed to decrease the throttle opening is cancelled out by the shifting down resulting from the shift down control performed for the CVT. In other words, a smaller reduction in engine speed is made than for the case where the driving torque is reduced to the target driving torque $T_0$ by performing only control that reduces the throttle opening, so that the engine speed can be kept at a predetermined level.

As one example, the predetermined level for the engine speed used in the above case can be set as the engine speed at the point where the control to rectify the understeer is implemented, or alternatively at a level that can achieve virtually the same level of acceleration as the engine speed at the point where the control is implemented. In either case, the engine speed is prevented from dropping sharply, so that favorable acceleration can be achieved once the understeer has been rectified. In the latter case especially, the required acceleration can be achieved without the vehicle feeling strange to the driver.

The predetermined level for the engine speed used in the above case may also be set at a sufficient level to prevent the engine from stalling, or at a level that is high enough to prevent the temperature of a catalytic converter device used to clean the exhaust gas from falling. In these cases, further problems such as stalling and poor operation by a catalytic converter due to a fall in temperature can be avoided in addition to the avoidance of poor acceleration following the rectification of understeer.

In step **S30** described above, the torque reduction control and shift down control are performed so that the suppression of a reduction in engine speed through shift down control is performed so as to be synchronized with the reduction in vehicle driving torque through the reduction in engine output. Since engine control is less responsive than gear ratio control, this means that the operation of the engine can be kept stable. When shift down control is performed for the gear ratio, there are cases where there is a temporary increase in engine speed followed by a reduction in engine output and a drop in engine speed, and conversely, when the control over the gear ratio is too slow, a reduction in engine output is accompanied by a temporary drop in engine speed followed by a rise in engine speed, but such instabilities can be prevented.

It should be noted that shift down control increases the vehicle driving torque for the same level of engine output, so that a controlled reduction in engine output achieved through a reduction in the throttle opening is larger than for the case where shift down control is not performed.

On the other hand, when the control unit **10** judges in the above step **S25** that the throttle opening $TV$ at the start of the understeer rectifying control does not exceed the threshold $TV_0$, which is to say, the driver is applying no or very little pressure onto the accelerator pedal, little reduction can be made to the engine output by performing control to reduce the throttle opening. In this case, the control unit **10** executes step **S31** onwards where shift down control is performed for the CVT to make use of the engine brake.

In more detail, in step **S31**, the control unit **10** calculates, based on the state of the vehicle, the target engine brake force $B_0$ that is required to reduce the vehicle driving torque and vehicle speed to the target values. In step **S32,** the control unit **10** then calculates the target shift down amount $\Delta R_0$ that achieves this target engine brake force $B_0$. After this, in step **S33** the control unit **10** controls the gear ratio of the CVT so as to shift down by this target shift down amount $\Delta R_0$.

As a result, even when the throttle opening is completely closed or almost completely closed so that there is little scope for rectifying understeer by reducing the engine output, the vehicle speed can be reduced and the understeer can be rectified using the engine brake without requiring a sudden application of the brakes. If such sudden applications of the brakes can be avoided, favorable behavior can be maintained for the vehicle.

**Claims**

1. An overall control system for a vehicle that includes (i) a posture control apparatus that controls vehicle posture in a yaw direction during cornering by controlling output of the engine and braking forces applied to right and left wheels and (ii) a continuously variable transmission whose gear ratio can be steplessly changed based on gearing characteristics that are set in advance, the overall control system comprising: an understeer detecting means for detecting understeer while the vehicle is comering; an engine output reducing means for reducing the engine output; a gear ratio changing means for changing the gear ratio of the continuously variable transmission from a gear ratio that is based on the gearing characteristics; and a control means for having the gear ratio shifted down by the gear ratio changing means when the understeer detecting means has detected the understeer,
   **characterized in that**,
   when the understeer detecting means has detected the understeer, the control means controls a reduction in the engine output by the engine output reducing means and a shift down in the gear ratio by the gear ratio changing means to have vehicle driving torque reduced while suppressing a decrease in engine speed.

2. The overall control system in accordance with claim 1, wherein the control means controls a reduction in the engine output by the engine output reducing means and a shift down in the gear ratio by the gear ratio changing means to reduce vehicle driving torque while keeping the engine speed at a same level as when control is commenced.

3. The overall control system in accordance with claim 1, wherein the control means controls a reduction in the engine output by the engine output reducing means and a shift down in the gear ratio by the gear ratio changing means to reduce vehicle driving torque while preventing engine speed from falling below the level that is able to produce almost a same level of acceleration as an engine speed when control is commenced.

4. The overall control system in accordance with claim 1, wherein the control means controls a reduction in the engine output by the engine output reducing means and a shift down in the gear ratio by the gear ratio changing means to reduce vehicle driving torque while preventing engine speed from falling to a level at which the engine stalls.

5. The overall control system in accordance with claim 1, wherein the control means controls a reduction in the engine output by the engine output reducing means and a shift down in the gear ratio by the gear ratio changing means to reduce vehicle driving torque while ensuring that engine speed can only fall to a value where a temperature of a catalytic converter apparatus used to clean exhaust gas is maintained within a predetermined range.

6. The overall control system in accordance with claim 1, wherein the control means controls the timing at which the engine output reducing means and the gear ratio changing means operate so that the gear ratio is shifted down in synchronization with a reduction in vehicle driving torque achieved through a reduction in engine output.

7. The overall control system in accordance with claim 1, wherein, when the understeer detecting means has detected the understeer and a throttle opening in the engine is below a predetermined value, the control means controls a shift down in the gear ratio by the gear ratio changing means before the braking forces are controlled by the posture control apparatus.

**Patentansprüche**

1. Gesamtsteuerungssystem für ein Fahrzeug, das enthält (i) ein Fahrdynamikregelgerät, das die Fahrdynamik des Fahrzeugs in einer Gierrichtung während der Kurvenfahrt durch eine Regelung der vom Motor abgegebenen Leistung und der auf die rechten und linken Räder aufgebrachten Bremskräfte regelt, und (ii) eine kontinuierlich variable Kraftübertragung, deren Getriebeverhältnis stufenlos auf Grund von zuvor eingestellten Getriebekennwerten verändert werden kann, wobei das Gesamtsteuerungssystem aufweist: eine Untersteuerungserfassungseinrichtung, die eine Untersteuerung während einer Kurvenfahrt des Fahrzeugs erfasst; eine Motorausgangsleistungsverringerungseinrichtung zur Verringerung der Motorausgangsleistung; eine Getriebeverhältnisänderungseinrichtung zur Änderung des Getriebeverhältnisses der kontinuierlich variablen Kraftübertragung von einem auf den Getriebekennwerten beruhenden Getriebeverhältnis und eine Regelungseinrichtung, die, wenn die Untersteuerungserfassungseinrichtung die Untersteuerung erfasst hat, das Getriebeverhältnis durch die Getriebeverhältnisänderungseinrichtung nach unten schiebt,

**dadurch gekennzeichnet, dass**

die Regelungseinrichtung, wenn die Untersteuerungseinrichtung die Untersteuerung erfasst hat, eine Verringerung der Ausgangsleistung des Motors durch die Motorausgangsleistungsverringerungseinrichtung und das Abwärtsschieben des Getriebeverhältnisses durch die Getriebeverhältnisänderungseinrichtung so regelt, dass das Antriebsdrehmoment des Fahrzeugs verringert und gleichzeitig eine Verringerung der Motordrehzahl unterdrückt wird.

2. Gesamtsteuerungssystem nach Anspruch 1, bei dem die Regelungseinrichtung eine Verringerung der Ausgangsleistung des Motors durch die Motorausgangsleistungsverringerungseinrichtung und ein Abwärtsschieben des Getriebeverhältnisses durch die Getriebeverhältnisänderungseinrichtung zur Verringerung des Antriebsdrehmoments des Fahrzeugs unter gleichzeitiger Beibehaltung der Motordrehzahl auf demselben Niveau wie zu Beginn der Regelung regelt.

3. Gesamtsteuerungssystem nach Anspruch 1, bei dem die Regelungseinrichtung eine Verringerung der Ausgangsleistung des Motors durch die Motorausgangsleistungsverringerungseinrichtung und ein Abwärtsschieben des Getriebeverhältnisses durch die Getriebeverhältnisänderungseinrichtung regelt, um das Antriebsdrehmoment des Fahrzeugs zu verringern und gleichzeitig einen Abfall der Motordrehzahl unter ein Niveau zu verhindern, das fast dasselbe Beschleunigungsniveau wie eine Motordrehzahl zu Beginn der Regelung erzeugen kann.

4. Gesamtsteuerungssystem nach Anspruch 1, bei dem die Regelungseinrichtung eine Verringerung der Ausgangsleistung des Motors durch die Motorausgangsleistungsverringerungseinrichtung und ein Abwärtsschieben des Getriebeverhältnisses durch die Getriebeverhältnisänderungseinrichtung regelt, um das Antriebsdrehmoment des Fahrzeugs zu verringern und gleichzeitig einen Abfall der Motordrehzahl auf ein Niveau zu verhindern, bei dem der Motor stehen bleibt.

5. Gesamtsteuerungssystem nach Anspruch 1, bei dem die Regelungseinrichtung eine Verringerung der Motorausgangsleistung durch die Motorausgangsleistungsverringerungseinrichtung und eine Abwärtsverschiebung des Getriebeverhältnisses durch die Getriebeverhältnisänderungseinrichtung zur Verringerung des Antriebsdrehmoments des Fahrzeugs regelt, um gleichzeitig sicher zu stellen, dass die Motordrehzahl nur auf einen Wert fallen kann, bei dem die Temperatur eines zur Abgasreinigung dienenden katalytischen Wandlers innerhalb eines vorbestimmten Bereichs gehalten wird.

6. Gesamtsteuerungssystem nach Anspruch 1, bei dem die Regelungseinrichtung die Zeit, zu der die Motorausgangsleistungsverringerungseinrichtung und die Getriebeverhältnisänderungseinrichtung arbeiten, so regelt, dass das Getriebeverhältnis synchron mit einer durch eine Verringerung der Motorausgangsleistung erreichten Verringerung des Fahrzeugantriebsdrehmoments nach unten verschoben wird.

7. Gesamtsteuerungssystem nach Anspruch 1, bei dem, wenn die Untersteuerungserfassungseinrichtung die Untersteuerung erfasst hat und ein Drosselöffnungsgrad in dem Motor unterhalb eines vorbestimmten Werts liegt, die Regelungseinrichtung eine Abwärtsverschiebung des Getriebeverhältnisses durch die Getriebeverhältnisänderungseinrichtung regelt, bevor die Bremskräfte durch das Fahrdynamikregelgerät geregelt werden.

## Revendications

1. Dispositif global de contrôle pour un véhicule qui comporte (i) un système de réglage de la dynamique de route qui règle la dynamique de route du véhicule en cas de risque d'embardée dans un virage en réglant la puissance du moteur et les forces de freinage appliquées aux roues droites et gauches et (ii) une transmission variable en continu dont le rapport de démultiplication peut être changé sans transition en fonction des caractéristiques de transmission fixées d'avance, le dispositif global de contrôle comportant : un moyen pour détecter un sous-virage pour détecter le sous-virage pendant que le véhicule prend un virage ; un moyen de réduction de la puissance du moteur pour réduire la puissance du moteur; un moyen pour changer le rapport de démultiplication pour changer le rapport de démultiplication de la transmission variable en continu à partir d'un rapport de démultiplication qui est basé sur les caractéristiques de transmission ; et un moyen de réglage pour rétrograder le rapport de démultiplication par le moyen pour changer le rapport de démultiplication lorsque le moyen pour détecter le sous-virage a détecté le sous-virage, **caractérisé en ce que**

lorsque le moyen pour détecter le sous-virage a détecté le sous-virage, le moyen de réglage règle une réduction dans la puissance du moteur par le moyen de réduction de la puissance du moteur et une rétrogradation dans le rapport de démultiplication par le moyen pour changer le rapport de démultiplication afin de réduire le couple-moteur du véhicule en supprimant une réduction de la vitesse du moteur.

2. Dispositif global de contrôle selon la revendication 1, dans lequel le moyen de réglage règle une réduction dans la puissance du moteur par le moyen de réduction de la puissance du moteur et une rétrogradation dans le rapport de démultiplication par le moyen pour changer le rapport de démultiplication pour réduire le couple-moteur du véhicule en maintenant la vitesse du moteur au même niveau que celui du début du réglage.

3. Dispositif global de contrôle selon la revendication 1, dans lequel le moyen de réglage règle une réduction dans la puissance du moteur par le moyen de réduction de la puissance du moteur et une rétrogradation dans le rapport de démultiplication par le moyen pour changer le rapport de démultiplication pour réduire le couple-moteur du véhicule en empêchant la vitesse du moteur de tomber au-dessous du niveau capable de produire presque le même niveau d'accélération qu'une vitesse de moteur lorsque le réglage débute.

4. Dispositif global de contrôle selon la revendication 1, dans lequel le moyen de réglage règle une réduction dans la puissance du moteur par le moyen de réduction de la puissance du moteur et une rétrogradation dans le rapport de démultiplication par le moyen pour changer le rapport de démultiplication pour réduire le couple-moteur du véhicule en empêchant la vitesse du moteur de tomber à un niveau où il cale.

5. Dispositif global de contrôle selon la revendication 1, dans lequel le moyen de réglage règle une réduction dans la puissance du moteur par le moyen de réduction de la puissance du moteur et une rétrogradation dans le rapport de démultiplication par le moyen pour changer le rapport de démultiplication pour réduire le couple-moteur du véhicule en assurant que la vitesse du moteur ne puisse tomber qu'à une valeur à laquelle une température d'un dispositif de conversion catalytique utilisé pour nettoyer les gaz d'échappement est maintenue dans une plage prédéterminée.

6. Dispositif global de contrôle selon la revendication 1, dans lequel le moyen de réglage règle le moment d'intervention du moyen de réduction de la puissance du moteur et du moyen pour changer le rapport de démultiplication de sorte que le rapport de démultiplication est rétrogradé en synchronisation avec une réduction du couple-moteur du véhicule réalisée par une réduction de la puissance du moteur.

7. Dispositif global de contrôle selon la revendication 1, dans lequel, lorsque le moyen pour détecter un sous-virage a détecté le sous-virage et que l'ouverture d'un papillon dans le moteur est inférieure à une valeur prédéterminée, le moyen de réglage règle une rétrogradation dans le rapport de démultiplication par le moyen pour changer le rapport de démultiplication avant que les forces de freinage ne soient réglées par le système de réglage de la dynamique de route.

## FIG. 1

**~10**

| Sensors | Calculating/Judging Units | Control Units | Outputs |
|---|---|---|---|

wheel speed sensor → wheel speed calculating unit ~61 → estimated vehicle speed calculating unit ~62

wheel speed sensor

stop lamp switch → stop lamp judging unit ~63

engine speed sensor → engine speed calculating unit ~64

accelerator opening sensor → accelerator opening obtaining unit ~65

shift position sensor → shift position judging unit ~66

steering angle sensor → steering angle calculating unit ~67

yaw rate sensor → yaw rate calculating unit ~68

lateral acceleration sensor → lateral acceleration calculating unit ~69

brake fluid pressure sensor → brake fluid pressure calculating unit ~70

brake fluid surface level switch → brake fluid surface level judging unit ~71

ABS ~51

braking force distribution control unit ~52

TCS ~53

posture control unit ~54

transmission control unit ~55

ABS lamp ~31

pressurizing motor ~32

front solenoid valve ~33

rear solenoid valve ~34

TSW solenoid valve ~35

engine controller ~37

ASW solenoid valve ~36

warning apparatus ~38

line pressure actuator ~39

gearing actuator ~40

EP 1 195 303 B1

FIG. 2

EP 1 195 303 B1

FIG. 3

# FIG. 4

start

various signals inputted — S1

$\phi(\theta)$, $\phi(G)$ calculation — S2

S3

$|\phi(\theta)| < |\phi(G)|$ ?

NO → S6

target value set
$\phi 0 = \phi(G) + k \times [\phi(\theta) - \phi(G)]$

YES

S4 — target value set
$\phi 0 = \phi(\theta)$

S5 — deviation calculated
$\Delta\phi = |\phi - \phi 0|$

S7 — thresholds $\Delta\phi os$
and $\Delta\phi us$ set

S8

$\phi > \phi 0$ & $\Delta\phi > \Delta\phi os$ ?

YES

NO

S10

$\phi < \phi 0$ & $\Delta\phi > \Delta\phi us$ ?

YES

S9 — oversteer rectifying control

NO

S11 — understeer rectifying control

return

# FIG. 5

```
        ┌─────────────────────┐
        │     understeer      │
        │  rectifying control │
        └─────────────────────┘
                   │
                   ▼           S21
             ╱───────────╲
            ╱  Δφ > Δφ0    ╲  YES
            ╲      ?       ╱ ──────────────────────────────────────┐
             ╲───────────╱                                         │
                   │ NO                                            │
                   ▼           S24                                 │
             ╱───────────╲                                         │
            ╱     is       ╲                                       │
            ╱ the driver    ╲  YES                                 │
            ╲   braking     ╱ ───────────────────────────────┐    │
             ╲     ?       ╱                                  │    │
              ╲─────────╱                                     │    │
                   │ NO                                       │    │
                   ▼           S25                            │    │
             ╱───────────╲                                    │    │
            ╱   TV>TV0     ╲  NO                              │    │
            ╲      ?       ╱ ──────────────┐                 │    │
             ╲───────────╱                 │                 │    │
                   │ YES                    │                 │    │
                   ▼                        │                 │    │
        ┌─────────────────────┐            │                 │    │
        │  ΔT0 calculation    │── S26      │                 │    │
        └─────────────────────┘            │                 │    │
                   │                        │                 │    │
                   ▼                        │                 │    │
        ┌─────────────────────┐            │                 │    │
        │   T0=T-ΔT0          │── S27      │                 │    │
        └─────────────────────┘            │                 │    │
                   │                        ▼       S31       │    │
                   │              ┌──────────────────┐        │    │
                   │              │  B0 calculation  │        │    │
                   ▼              └──────────────────┘        │    │
        ┌─────────────────────┐            │       S32        │    │
        │  ΔR0 calculation    │── S28      │                 │    │
        └─────────────────────┘            ▼                  │ S22│
                   │              ┌──────────────────┐   ┌──────────────┐
                   ▼              │  ΔR0 calculation │   │ brake control│
        ┌─────────────────────┐  └──────────────────┘   └──────────────┘
        │  ΔTV0 calculation   │── S29      │                 │ S23│
        └─────────────────────┘            │       S33        ▼    │
                   │                        ▼            ┌──────────────┐
                   ▼              ┌──────────────────┐   │ suppress gear│
        ┌─────────────────────┐  │   shift down     │   │ ratio changing│
        │      torque         │  │    control       │   │    speed     │
        │    reduction        │  └──────────────────┘   └──────────────┘
        │  control, shift     │── S30      │                 │
        │   down control      │            │                 │
        └─────────────────────┘            │                 │
                   │                        │                 │
                   ▼                        │                 │
                   ●────────────────────────┴─────────────────┘
                   │
                   ▼
             ┌──────────┐
             │  return  │
             └──────────┘
```

## FIG. 6

## FIG. 7

# FIG. 8